(19) Europäisches Patentamt
European Patent Office
Office européen des brevets

(11) **EP 1 958 036 B1**

(12) **EUROPÄISCHE PATENTSCHRIFT**

(45) Veröffentlichungstag und Bekanntmachung des Hinweises auf die Patenterteilung:
**20.05.2009 Patentblatt 2009/21**

(21) Anmeldenummer: **06841292.3**

(22) Anmeldetag: **07.12.2006**

(51) Int Cl.:
*G05D 1/02* (2006.01)

(86) Internationale Anmeldenummer:
**PCT/EP2006/069411**

(87) Internationale Veröffentlichungsnummer:
**WO 2007/065923 (14.06.2007 Gazette 2007/24)**

(54) **BAHNPLANUNG**

PATH PLANNING

PLANIFICATION DE TRAJECTOIRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.12.2005 DE 102005058809**

(43) Veröffentlichungstag der Anmeldung:
**20.08.2008 Patentblatt 2008/34**

(73) Patentinhaber: **Hella KGaA Hueck & Co.**
**59552 Lippstadt (DE)**

(72) Erfinder:
• **HEINIG, Sven**
**09353 Oberlungwitz (DE)**

• **HÖVER, Norbert**
**59555 Lippstadt (DE)**
• **MAGYAR, Peter**
**33813 Oerlinghausen (DE)**
• **OTTENHUES, Thomas**
**48477 Hörstel (DE)**
• **WASSMUTH, Joachim**
**33102 Paderborn (DE)**

(56) Entgegenhaltungen:
**WO-A-20/04050458       DE-A1- 4 124 654**
**DE-A1- 10 156 067       DE-B1- 2 901 504**
**DE-C1- 10 114 412**

EP 1 958 036 B1

**Beschreibung**

Die vorliegende Erfindung betrifft ein Verfahren zur Bestimmung einer in einer zweidimensionalen Ebene verlaufenden Bahnlinie eines Kraftfahrzeugs für eine geführte Bewegung des Kraftfahrzeugs mit Hilfe eines Fahrerassistenzsystems, wobei ein Anfangszustand mit einem Endzustand durch die Bahnlinie verbunden wird und jeder der Zustände $Z_i = [x_i, y_i, \psi_i, c_i]$ entlang der Bahnlinie durch vier Zustandskoordinaten charakterisiert wird, wobei $x_i$ und $y_i$ die kartesischen Koordinaten eines Punktes $P_i$ bezeichnen, $\psi_i$ der Richtungswinkel der Tangente und $c_i$ die Krümmung der Bahnlinie im Punkt $P_i$ ist und wobei die Bahnlinie aus einer Anzahl elementarer Bahnlinien, die sich in Anschlusspunkten $AP_i$ aneinander anschließen, in der Weise zusammengesetzt wird, dass die vier Zustandskoordinaten des Zustands $Z_i$ in den Anschlusspunkten $AP_i$ einen stetigen Übergang besitzen.

STAND DER TECHNIK

Verfahren zur Bestimmung einer in einer zweidimensionalen Ebene verlaufenden Bahnlinie eines gelenkten Kraftfahrzeugs sind aus dem Stand der Technik grundsätzlich bekannt. Sowohl aus der Praxis als auch aus der Fachliteratur sind eine ganze Reihe derartiger Verfahren auf dem Gebiet der Steuerung und/oder Regelung von beweglichen Körpern, Kraftfahrzeugen, Robotern und so weiter bekannt, bei denen durch eine Sollwertvorgabe des zurückzulegenden Weges in einer zweidimensionalen Ebene die Bahnlinie systematisch geplant wird.

Ein typisches Beispiel ist die Bahnplanung bei gelenkten Kraftfahrzeugen, um mit Hilfe von Fahrer- und Parkassistenzsystemen zum Beispiel ein geführtes Einparken des Kraftfahrzeugs in eine Parklücke zu ermöglichen.

Ein grundlegendes Ziel der Bahnplanung ist die Verbindung zweier Zustände (Anfangszustand und Endzustand) eines bewegten Objekts, wie zum Beispiel eines Kraftfahrzeugs, mit einer, zwischen diesen beiden Zuständen liegenden Trajektorie.

Unter dem Begriff "Zustand" soll nachfolgend ein Vektor verstanden werden, der die geometrischen Koordinaten des Kraftfahrzeugs in der Bewegungsebene, einen Richtungswinkel der Tangente sowie die Bahnkrümmung der Bahnlinie umfasst. Die Bahnlinie ist dabei ein Teil der Trajektorie des Objekts, und zwar die Projektion der Trajektorie auf die zweidimensionale Bewegungsebene. Anschaulich gesprochen ist die Bahnlinie die Verbindungslinie aller geometrischen Koordinaten des beweglichen Objekts.

Ein Zustand $Z_i$ im vorstehend genannten Sinn kann somit durch vier allgemeine Koordinaten charakterisiert werden:

$$Z_i = [x_i, y_i, \psi_i, c_i] \tag{1}$$

Ein Koordinatenpunkt $P_i$ besteht demgegenüber nur aus den geometrischen Koordinaten:

$$P_i = [x_i, y_i] \tag{2}$$

wobei $x_i$, $y_i$ die kartesischen Koordinaten des einzelnen Punkts in einem kartesischen Koordinatensystem sind. Im oben genannten Zustandsvektor $z_i$ bezeichnen $\psi_i$ den Richtungswinkel der Tangente und $c_i$ die Krümmung der Bahnlinie im Punkt $P_i$.

Üblicherweise wird eine Bahnlinie, die einen Anfangszustand und einen Endzustand miteinander verbindet, aus mehreren elementaren Bahnlinien (kurz: EBL) zusammengesetzt, die aus Vereinfachungsgründen uniform sind'. Das bedeutet, dass bei der Bahnplanung nur elementare Bahnlinien gleicher Art eingesetzt werden.

In der Praxis werden verschiedene Arten von elementaren Bahnlinien, wie zum Beispiel Spline-Funktionen, PolynomFunktionen, trigonometrische Funktionen oder Klothoiden eingesetzt. Eine Klothoide ist eine spezielle ebene Kurve mit der Besonderheit, dass sich deren Krümmung c linear verändert.

Die vorstehend genannten elementaren Bahnlinien unterscheiden sich im Wesentlichen nur durch ihre mathematische Beschreibung. Eine Gemeinsamkeit aller elementaren Bahnlinien besteht darin, dass sie auch mit Geraden und/oder Kreisbahnen kombiniert werden können. Mit anderen Worten bedeutet das, dass Geraden und Kreisbahnen Spezialfälle der elementaren Bahnlinien sind.

Eine Bahnlinie eines bewegten Körpers ist in der Regel aus einer Mehrzahl elementarer Bahnlinien zusammengesetzt, die sich in gemeinsamen Anschlusspunkten (kurz: AP) treffen. Die Anschlusspunkte sind daher besondere Punkte der Bahnlinie, die jeweils zu zwei aufeinander folgenden elementaren Bahnlinien (EBL) gehören.

Eine Besonderheit der Bahnlinien besteht darin, dass sie sowohl entlang ihres gesamten Verlaufs als auch in den Anschlusspunkten systembedingt keine sprunghaften Zustandsänderungen aufweisen dürfen. Das bedeutet mit anderen Worten, dass nicht nur im Bahnverlauf, sondern auch in der ersten Ableitung (Tangente) und in der zweiten Ableitung (Bahnkrümmung) stets ein kontinuierlicher Übergang zwischen benachbarten elementaren Bahnlinien in den Anschlusspunkten gewährleistet sein muss.

Ist also $AP_i$ ein Anschlusspunkt zweier elementarer Bahnlinien (EBL), die jeweils eine Bahnlänge $s_i$ aufweisen, und bezeichnet man mit $\overline{F}_i(s)$ und $\overline{F}_{i+1}(s)$ die Vektorfunktionen mit den Komponenten (x, y), die die beiden einander anschließenden elementaren Bahnlinien beschreiben, so ergibt sich die Gleichung:

$$\lim_{\varepsilon \to 0} Z_i\left[\overline{F}_i\left(s_i - \varepsilon\right), \psi_i\left(s_i - \varepsilon\right), c_i\left(s_i - \varepsilon\right)\right] = \lim_{\varepsilon \to 0} Z_{i+1}\left[\overline{F}_{i+1}\left(s_i + \varepsilon\right), \psi_{i+1}\left(s_i + \varepsilon\right), c_{i+1}\left(s_i + \varepsilon\right)\right] \qquad (3)$$

Gleichung (3) stellt die wichtigste Randbedingung bei der Bahnplanung dar.

Bei technischen Anwendungen, wie zum Beispiel beim geführten Ein- und Ausparken eines Kraftfahrzeugs mit Hilfe eines Fahrer- oder Parkassistenzsystems, müssen neben der in Gleichung (3) beschriebenen Randbedingung darüber hinaus noch weitere Randbedingungen erfüllt sein:

- die Koordinaten (x, y) müssen gegebenenfalls mehrfach begrenzt sein, um eine Kollisionsfreiheit zu gewährleisten,

- die Bahnkrümmung c und/oder deren zeitliche Ableitung dc/dt müssen aufgrund der technischen Realisierbarkeit mittels der Lenkeinrichtung des Kraftfahrzeugs begrenzt sein.

Anhand dieser einleitenden Darstellung wird deutlich, dass die Bahnplanung ein überaus komplexer Prozess ist, wenn alle Anforderungen und Randbedingungen erfüllt werden sollen.

Aus dem Stand der Technik, zum Beispiel aus der DE 29 01 504 B1 sowie aus der DE 19 84 222 A1, sind verschiedene Lösungsansätze, die sich mit Verfahren zur Bahnplanung befassen, bekannt.

In ersten grundlegenden Lösungsansätzen sind ausschließlich Kreisbögen und Geraden als elementare Bahnlinien für zusammengesetzte Bahnlinien eingesetzt worden. Dieser Ansatz kann aber die gemäß Gleichung (3) geforderte Randbedingung nicht erfüllen.

Um die Randbedingung der kontinuierlichen Zustandsübergänge gemäß Gleichung (3) erfüllen zu können, werden neben den bereits erwähnten elementaren Bahnlinien in Form von Kreisbögen und Geraden wahlweise auch Spline-Funktionen, trigonometrische Funktionen, Polynomfunktionen oder Klothoiden eingesetzt.

Im Stand der Technik werden aufgrund ihrer engen Verbindung zu den Gesetzmäßigkeiten der Bewegung von gelenkten Kraftfahrzeugen häufig Klothoiden für die Bahnplanung eingesetzt. Klothoiden haben ferner den Vorteil, dass die Länge der Bahnlinie bei einer Verbindung eines Anfangszustands mit einem Endzustand minimal wird.

Die vier Zustandskoordinaten eines sich auf einer Klothoidenbahnlinie bewegenden Objekts werden durch die nachfolgende Gleichung beschrieben:

$$\frac{d}{ds}\begin{bmatrix} x \\ y \\ \psi \\ c \end{bmatrix} = \begin{bmatrix} \cos\psi \\ \sin\psi \\ c \\ k \end{bmatrix} \qquad (4)$$

wobei s wiederum die Bahnlänge, c die Bahnkrümmung der Klothoide, $\psi$ den Kurswinkel, x und y die kartesischen Koordinaten eines Punktes auf der Bahnlinie bezeichnen. Die Eingangsgröße der Zustandsgleichung, der Parameter k, ist ein abschnittsweise konstanter Parameter, der häufig auch als "Schärfe" der Klothoide bezeichnet wird.

Aus Gleichung (4) wird deutlich, dass die Zustandsvariablen auf einer elementaren Klothoidenbahnlinie (EKBL) stets kontinuierliche Funktionen in Abhängigkeit von s sind. Die Erfüllung der Randbedingung des kontinuierlichen Übergangs in den Anschlusspunkten einer zusammengesetzten Bahnlinie stellt weiterhin ein besonderes Problem bei der Bahnplanung dar.

Für die Bahnplanung mit Hilfe von Klothoiden sind aus dem Stand der Technik eine ganze Reihe von Lösungen und Lösungsansätzen bekannt, wie zum Beispiel Dubins: "On Curves of Minimal Length with a Constraint on Average Curvature, and with Prescibed Initial and Terminal Positions and Tangents", American Journal of Mathematics, Vol. LXXIX, 1957, S. 497-516; Souères and Laumond: "Shortest Paths synthesys for a Car-Like Robot", IEEE Trans. On Automatic Control, Vol. 41, No. 5, May 1996, S. 672-688. Diese aus dem Stand der Technik bekannten Lösungsverfahren sind allerdings für die praktische Anwendung aufgrund Ihres sehr hohen rechnerischen Aufwands wenig geeignet.

Eine grundlegende Schwierigkeit bei der Behandlung von Klothoiden besteht insbesondere darin, dass eine geschlossene Integration der Gleichung (4) nicht möglich ist und zu Fresnel schen Integralen führt.

Wie aus der deutschen Patentanmeldung DE 199 40 007 A1 bekannt, lässt sich mit Hilfe einer Reihenentwicklung der Funktionen Kosinus und Sinus eine Näherungslösung finden, die folgende Form aufweist:

$$\begin{bmatrix} x(s) \\ y(s) \end{bmatrix} = \begin{bmatrix} \displaystyle\sum_{n=0}^{N}(-1)^n \frac{k^{2n}s^{4n+1}}{2^{2n}(4n+1)(2n)!} \\ \displaystyle\sum_{n=0}^{N}(-1)^n \frac{k^{2n+1}s^{4n+3}}{2^{2n+1}(4n+3)(2n+1)!} \end{bmatrix} \qquad (5)$$

In dieser Gleichung bezeichnet die endliche positive Zahl $N < \infty$ den Grad der Näherungspolynome. Gleichung (5) stellt somit die elementare Klothoidenbahnlinie (EKBL) in parametrischer Form als Polynome x(s) und y (s) dar.

Eine Schwierigkeit der auf diese Weise erhaltenen Polynomfunktionen besteht darin, dass sie für systematische und analytische Bahnplanungen nicht geeignet sind, obwohl sie eine numerische Bahnberechnung möglichen.

Hier setzt die vorliegende Erfindung an.

Der vorliegenden Erfindung liegt die Aufgabe zugrunde, ein Verfahren der eingangs genannten Art zur Verfügung zu stellen, bei dem Klothoiden eingesetzt werden können und bei dem der Rechenaufwand in der Weise verringert werden kann, dass eine systematische Bahnplanung auch auf analytischem Weg möglich ist.

Diese Aufgabe wird durch ein Verfahren mit den Merkmalen des Anspruchs 1 gelöst. Die Unteransprüche betreffen vorteilhafte Weiterbildungen der Erfindung.

Gemäß Anspruch 1 zeichnet sich das erfindungsgemäße Verfahren dadurch aus, dass der Bahnlinie mindestens ein gleichschenkliges Plandreieck mit den Eckpunkten $\Delta(P_0, P_3, P_5)$ zugeordnet wird, bei dem $P_0$ den Startpunkt und $P_3$ den Zielpunkt mindestens eines Teils der Bahnlinie bezeichnet, und der Punkt $P_5$, welcher der Plandreiecksbasis $\overline{P_0P_3}$ gegenüberliegt, durch den Schnittpunkt der beiden Plandreiecksschenkel $\overline{P_0P_5}$ beziehungsweise $\overline{P_5P_3}$ in der Weise bestimmt wird, dass die beiden Schenkel $\overline{P_0P_5}$, $\overline{P_5P_3}$ eine identische Länge aufweisen und mit der Plandreieckseite $\overline{P_0P_3}$ jeweils einen identischen Scheitelwinkel $\psi_1$ einschließen, wobei der Winkel $\psi_1$ des Plandreiecks beim Eckpunkt $P_0$ durch den Winkel zwischen der Tangente der Bahnlinie und der Dreieckseite $\overline{P_0P_3}$ bestimmt wird und durch die Parameter des Plandreiecks die Parameter der elementaren Bahnlinien bestimmt werden. Durch diese Maßnahmen kann die Bahnplanung im Vergleich zu den aus dem Stand der Technik bekannten Verfahren stark vereinfacht werden. Insbesondere kann mit Hilfe des erfindungsgemäßen Verfahrens erreicht werden, dass aus den Parametern des Plandreiecks die Parameter, die zur Beschreibung der elementaren Bahnlinie geeignet sind, auf einfache Weise und mit geringem Aufwand abgeleitet werden können.

Vorzugsweise wird die Bahnlinie aus mindestens zwei Klothoiden zusammengesetzt. Es hat sich gezeigt, dass sich Klothoiden in besonders vorteilhafter Weise für die Bahnplanung eignen. Es besteht alternativ auch die Möglichkeit, dass die elementaren Bahnlinien eine trigonometrische Funktion und/oder eine Polynomfunktion und/oder eine Kreisbahn und/oder eine Spline-Funktion umfassen.

Es besteht in einer vorteilhaften Ausführungsform weiterhin die Möglichkeit, dass in die Bahnlinie mindestens eine Gerade und/oder mindestens ein Kreisbogen eingefügt werden. Die Möglichkeit, mindestens eine Kreisbahn in die Bahnlinie einzufügen, ist insbesondere dann vorteilhaft, wenn die durch die Lenkeinrichtung des Kraftfahrzeugs vorgegebene, maximal mögliche Krümmung der Bahnlinie bei der Bahnplanung erreicht wird.

Insbesondere können die einzelnen elementaren Bahnlinien im Anschlusspunkt einen Wendepunkt bilden. Die elementaren Bahnlinien können im Anschlusspunkt auch keinen Wendepunkt bilden. Ob ein Wendepunkt in die Bahnplanung einbezogen wird, hängt zum Beispiel davon ab, wie das Kraftfahrzeug in eine Parklücke eingeparkt werden soll.

Es kann vorgesehen sein, dass jeder der symmetrischen elementaren Bahnlinien jeweils ein gleichschenkliges Plandreieck zugeordnet wird und die Plandreiecke in der Weise miteinander verbunden werden, dass jeweils die beiden Schenkel der beiden sich aneinander anschließenden Plandreiecke in einem gemeinsamen Anschlusspunkt eine Gerade bildern.

Vorzugsweise werden die Plandreiecke in den Anschlusspunkten durch eine Gerade miteinander verbunden werden, wobei die Gerade eine Verlängerung der sich an sie anschließenden Schenkel der Plandreiecke bildet.

Es besteht die Möglichkeit, dass die den Plandreiecken zugeordnete elementare Bahnlinie mindestens abschnittsweise eine symmetrische Doppelklothoide ist. Dadurch kann die Planung der Bahnlinie mit Hilfe des hier gezeigten Verfahrens weiter vereinfacht werden.

Gemäß einer vorteilhaften Weiterbildung ist vorgesehen, dass der symmetrischen Doppelklothoide ein gleichschenkliges Plandreieck $\Delta(P_0, P_3, P_5)$ zugeordnet wird, das im Punkt $P_5$ durch eine Winkelhalbierende in zwei rechtwinklige Dreiecke $\Delta(P_0, P_5, P_2)$ und $\Delta(P_3, P_5, P_2)$ aufgeteilt wird, wobei die Dreiecke $\Delta(P_0, P_5, P_2)$ und $\Delta(P_3, P_5, P_2)$ den Winkel $\psi_1$ und identische Ankatheten $x_{01} = \overline{P_0 P_2} = \overline{P_2 P_3}$ aufweisen und diese rechtwinkligen Dreiecke jeweils einer Hälfte der symmetrischen Doppelklothoide zugeordnet werden.

Es besteht die Möglichkeit, dass sich die beiden Klothoiden auf der Dreiecksseite $\overline{P_2 P_5}$ in einem Punkt $P_1$ treffen und weiterhin die Punkte $P_0$ und $P_3$ mit dem Punkt $P_1$ in der Weise verbinden, dass die beiden Klothoidenbahnlinien ihre maximale Bahnkrümmung $c_1 = P(\psi_1)/x_{01}$ im Anschlusspunkt $AP_1$ erreichen.

In einer bevorzugten Ausführungsform ist vorgesehen, dass das charakteristische Polynom $P(\psi_2)$ der Klothoidenbahnlinie die Form $P(\psi_1)=2\psi_{1L} P_y(\psi_1) tg\psi_1 + P_x(\psi_1) \cos\psi_1$ besitzt und die Polynomfunktionen $P_x$ und $P_y$ durch die

Gleichungen $\qquad P_x(\psi_1) = \sum_{n=0}^{N}(-1)^n \frac{\psi_1^{2n}}{(4n+1)(2n)!} \qquad$ und $\qquad P_y(\psi_1) = \sum_{n=0}^{N}(-1)^n \frac{\psi_1^{2n+1}}{(4n+3)(2n+1)!} \qquad$ und

$$P_y(\psi_1) = \sum_{n=0}^{N}(-1)^n \frac{\psi_1^{2n+1}}{(4n+3)(2n+1)!} \qquad \text{bestimmt werden.}$$

Das Verfahren beruht auf der Erkenntnis, dass die elementaren Klothoidenbahnlinien im Vergleich zu Gleichung (5) in parametrischer Form wesentlich vorteilhafter und einfacher dargestellt werden können.

Dazu geht man von den für k = const. gültigen Gleichungen aus:

$$c = ks \qquad\qquad\qquad (6)$$

$$\psi = k\frac{s^2}{2} \qquad\qquad\qquad (7)$$

aus und setzt das Gleichungspaar

$$\frac{k^{2n} s^{4n+1}}{2^{2n}} = s\psi^{2n}$$

$$\frac{k^{2n+1} s^{4n+3}}{2^{2n+1}} = s\psi^{2n+1} \qquad\qquad\qquad (8)$$

in Gleichung (5) ein. Daraus können dann die beiden Koordinaten x(s) und y(s) in Form von parametrischen Polynomfunktionen

$$\begin{bmatrix} x(s) \\ y(s) \end{bmatrix} = \begin{bmatrix} sP_x(\psi) \\ sP_y(\psi) \end{bmatrix} \qquad (9)$$

berechnet werden.

Für N=3 hat ein beispielhaftes Näherungspolynom die folgende Gestalt:

$$\begin{bmatrix} P_x(\psi) \\ P_y(\psi) \end{bmatrix} = \begin{bmatrix} \sum_{n=0}^{3} (-1)^n \dfrac{\psi^{2n}}{(4n+1)(2n)!} \\ \sum_{n=0}^{3} (-1)^n \dfrac{\psi^{2n+1}}{(4n+3)(2n+1)!} \end{bmatrix} = \begin{bmatrix} 1 - \dfrac{\psi^2}{10} + \dfrac{\psi^4}{216} - \dfrac{\psi^6}{9360} \\ \psi\left(\dfrac{1}{3} - \dfrac{\psi^2}{42} + \dfrac{\psi^4}{1320} - \dfrac{\psi^6}{75600}\right) \end{bmatrix} \qquad (10)$$

Diese Näherung mit N=3 stellt eine für praktische Anwendungen im Allgemeinen ausreichende Genauigkeit dar. Gemäß einer Weiterbildung des Verfahrens kann auch die unbekannte Bogenlänge in den beiden Teilgleichungen (9) eliminiert werden. Dann kann die durch die kartesischen Koordinaten der Bahnlinie beschriebene Funktion in einer geschlossenen Form wie folgt angegeben werden:

$$y = \frac{P_y(\psi)}{P_x(\psi)} x \qquad (11)$$

Man erkennt, dass der geometrische Verlauf der Bahnlinie einer elementaren Klothoidenbahnlinie (EKBL) mit Hilfe von drei Zustandskoordinaten x, y, $\psi$ angegeben werden kann. Der Winkel $\psi$ spielt bei dem hier offenbarten Verfahren somit eine sehr wichtige Rolle.

Vorzugsweise werden Stellgrößen für die Lenkeinrichtung des Kraftfahrzeugs dadurch bestimmt, dass die Länge $s_{1i}$ und die Schärfe $k_i$ der Klothoiden durch die Formeln $s_{1i} = \dfrac{2\tilde{\psi}_i}{c_{i\max}}; \quad k_i = \dfrac{c_{i\max}^2}{2\psi_i}$ bestimmt werden, wobei die Bogenlänge des mindestens einen Kreisbogens durch die Beziehung $s_{ai} = 2\dfrac{\varphi_i - \psi_i}{c_{i\max}}$ bestimmt wird.

Eine Vorrichtung, die zur Durchführung des hier offenbarten Verfahrens und zum Einbau in ein Kraftfahrzeug geeignet ist, kann so ausgeführt sein, dass sie eine fest verdrahtete elektronische Einheit ist. Die Vorrichtung kann insbesondere eine frei programmierbare elektronische Einheit sein.

Vorzugsweise steuert die Vorrichtung vorausberechnete und gespeicherte Bahnlinien an.

Vorteilhafterweise besteht die Möglichkeit, dass die Vorrichtung mit einer Umgebungskarte gekoppelt ist und die Bahnplanung in Abhängigkeit der Umgebungskarte erfolgen kann.

Vorzugsweise ist die Vorrichtung ein Teil eines Fahrerassistenzsystems.

ZEICHNUNGEN

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1          eine Darstellung der charakteristischen Größen einer asymmetrischen Doppelklothoide;

Fig. 2          eine Bahnlinie einer asymmetrischen Doppelklothoide sowie deren geometrische Charakterisierung, die bei einem erfindungsgemäßen Verfahren eingesetzt wird;

Fig. 3 die charakteristischen Größen einer elementaren Klothoidenbahnlinie und der daraus gebildeten symmetrischen Doppelklothoide;

Fig. 4 eine Bahnlinie einer elementaren Klothoidenbahnlinie und eine daraus gebildete Doppelklothoide;

Fig. 5 ein Plandreieck einer symmetrischen Doppelklothoide;

Fig. 6 ein Plandreieck einer aus einer symmetrischen Doppelklothoide und einer Geraden zusammengesetzten Bahnlinie;

Fig. 7 eine Darstellung der Klothoidenfunktion;

Fig. 8 eine Darstellung der charakteristischen Größen bei einer Bahnplanung mit begrenzter Bahnkrümmung;

Fig. 9, 10 Darstellungen eines Plandreiecks mit einem den Klothoiden zugeordnetem Basisdreieck;

Fig. 11 ein Plandreieck zweier elementarer Klothoidenbahnlinien, die zur Begrenzung der Bahnkrümmung miteinander verbunden sind;

Fig. 12 - 14 Verläufe der zusammengesetzten Bahnlinie bei einer Veränderung des Verhältnisses der Basislängen der Klothoiden;

Fig. 15 schematisch ein Verfahren zur Bahnplanung gemäß einer zweiten Ausführungsform der vorliegenden Erfindung mit Hilfe von miteinander verbundenen gleichschenkligen Plandreiecken und/oder eingefügten Geraden;

Fig. 16 schematisch die Bestimmung, ob eine Parklücke für ein Kraftfahrzeug geeignet ist, mittel des hier offenbarten Verfahrens.

## BESCHREIBUNG DER AUSFÜHRUNGSBEISPIELE

Nachfolgend werden die wesentlichen Aspekte des erfindungsgemäßen Verfahrens zur Bestimmung einer in einer zweidimensionalen Ebene verlaufenden Bahnlinie eines Kraftfahrzeugs näher erläutert. Das erfindungsgemäße Verfahren kann beispielsweise in Kraftfahrzeugen eingesetzt werden, um zu bestimmen, ob eine Parklücke für das Kraftfahrzeug geeignet ist. Eine entsprechende Vorrichtung, die zur Durchführung des hier offenbarten Verfahrens geeignet ist, kann in ein Kraftfahrzeug eingebaut werden und ist vorzugsweise Teil eines Fahrerassistenzsystems. Mit Hilfe des nachfolgend beschriebenen Verfahrens kann zum Beispiel eine geführte Bewegung des Kraftfahrzeugs mit Hilfe eines Fahrerassistenzsystems beziehungsweise Parkassistenzsystems erreicht werden.

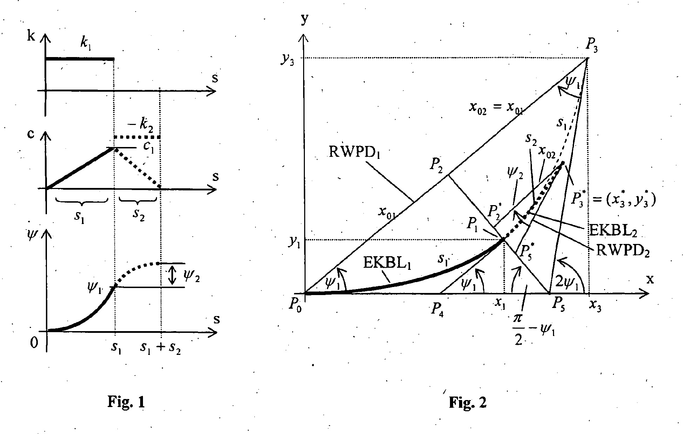

Zunächst wird auf Fig. 1 und Fig. 2 Bezug genommen, in denen zwei elementare Klothoidenbahnlinien mit einer Schärfe $k_1$ beziehungsweise $k_2$ sowie mit einer Bahnlänge $s_1$ beziehungsweise $s_2$ dargestellt sind. Um die weitere Darstellung zu vereinfachen, soll nachfolgend angenommen werden, dass eine erste elementare Klothoidenbahnlinie $EKBL_1$, die für die Bahnplanung eingesetzt wird, im Ursprung des Koordinatensystems im Punkt $P_0=[0,0]$ und mit einem Zustand $Z_0=[0, 0, 0, 0]$ beginnen soll. Diese erste elementare Klothoidenbahnlinie $EKBL_1$ endet in einem Punkt $P_1=[x_1, y_1]$. An diesem Punkt $P_1$ befindet sich die erste elementare Klothoidenbahnlinie $EKBL_1$ in einem Zustand $Z_1=[x_1, y_1, \psi_1, c_1]$. An die erste elementare Klothoidenbahnlinie $EKBL_1$ wird am Punkt $P_1$ eine zweite elementare Klothoidenbahnlinie $EKBL_2$ angefügt, welche die Punkte $P_1=[x_1, y_1]$ und $P_3^*=[x_3^*, y_3^*]$ beziehungsweise die entsprechenden Zustände $Z_1=[x_1, y_1, \psi_1, c_1]$ und $Z_3=[x_3^*, y_3^*, \psi_1 + \psi_2, 0]$ miteinander verbindet.

Jeder der beiden in Fig. 2 gezeigten elementaren Klothoidenbahnlinien $EKBL_1$ und $EKBL_2$ wird ein rechtwinkliges Plandreieck $\Delta(P_0, P_2, P_5)$ beziehungsweise $\Delta(P_3^*, P_2^*, P_5^*)$ zugeordnet. Diese beiden Plandreiecke besitzen einen Basiswinkel $\psi_1$ beziehungsweise $\psi_2$.

Die Basen der beiden elementaren Klothoidenbahnlinien $EKBL_1$ und $EKBL_2$ werden jeweils durch die Ankatheten $\overline{P_0P_2}$ beziehungsweise $\overline{P_2^*P_3^*}$ gebildet. Die Ankatheten der beiden Plandreiecke $\Delta(P_0, P_2, P_5)$ beziehungsweise $\Delta(P_3^*, P_2^*, P_5^*)$ weisen eine Länge $x_{01}$ beziehungsweise $x_{02}$ auf.

Man erkennt, dass die Gegenkatheten $\overline{P_2P_5}$ beziehungsweise $\overline{P_2^*P_5^*}$ der Plandreiecke in einem gemeinsamen Anschlusspunkt $P_1$ senkrecht zur Tangente orientiert sind.

Beim Verlauf der beiden elementaren Klothoidenbahnlinien muss noch berücksichtigt werden, dass aufgrund der oben genannten Gleichungen (6) und (7) folgende Beziehungen gelten:

$$\frac{s_1}{\psi_1} = \frac{2}{c_1} \quad und \quad \frac{s_2}{\psi_2} = \frac{2}{c_1} \qquad (12)$$

Ist $k_2 > k_1$, so wird $s_2 < s_1$ und $\psi_2 < \psi_1$ bei gleicher Änderung von c sein.

Geht man von der oben genannten Gleichung (9) aus, erhält man:

$$x_1 = s_1 P_x(\psi_1) \qquad (13)$$

$$y_1 = s_1 P_y(\psi_1) \qquad (14)$$

Darüber hinaus wird der geometrische Zusammenhang:

$$\frac{x_{01}}{\cos\psi_1} - x_1 = y_1 ctg\left(\frac{\pi}{2} - \psi_1\right) \qquad (15)$$

verwendet.

Aus der vorstehend genannten Gleichung (15) ergibt sich dann der Zusammenhang zwischen der Basislänge $x_{01}$ und der Bogenlänge $s_1$ der elementaren Klothoidenbahnlinie EKBL$_1$:

$$\frac{x_{01}}{s_1} = \left[P_y(\psi_1)tg\,\psi_1 + P_x(\psi_1)\right]\cos\psi_1 \qquad (16)$$

In dieser Gleichung ist die Bogenlänge $s_1$ eine unbekannte Größe.

Die Bogenlänge $s_1$ kann allerdings unter Hinzuziehung der Gleichungen (6) und (7) bestimmt werden:

$$s_1 = \frac{2\psi_1}{c_1} \qquad (17)$$

Dadurch kann die Bogenlänge $s_1$ aus Gleichung (16) eliminiert werden. Daraus ergibt sich die nachfolgend dargestellte Grundgleichung der Bahnplanung mittels einer elementaren Klothoidenbahnlinie (EKBL):

$$x_{01} = \frac{P(\psi_1)}{c_1} \qquad (18)$$

wobei $P(\psi_1)$ die charakteristische Polynomfunktion für die elementare Klothoidenbahnlinie EKBL$_1$ ist und die nachfolgende Form hat:

$$P(\psi_1) = 2\psi_1\left\lfloor P_y(\psi_1)tg\,\psi_1 + P_x(\psi_1)\right\rfloor\cos\psi_1 \qquad (19)$$

Ein Vorteil besteht darin, dass das zu der ersten elementaren Klothoidenbahnlinie EKBL$_1$ gehörende Pland-

reieck $\Delta(P_0, P_2, P_5)$ durch den Zustand $Z_1=[x_1, y_1, \psi_1, c_1]$ der Bahnlinie in ihrem Endpunkt $P_1$ vollständig bestimmt ist.

Vorteilhaft ist ferner, dass eine vollständige und anschauliche Verbindung zwischen der analytischen und der geometrischen Darstellung der Bahnlinie existiert.

Entsprechend gilt auch für die zweite elementare Klothoidenbahnlinie $EKBL_2$ unter der Voraussetzung, dass $c_2 = c_1$ ist:

$$x_{02} = \frac{P(\psi_2)}{c_1} \tag{20}$$

$$P(\psi_2) = 2\psi_2 \lfloor P_y(\psi_2) tg\,\psi_2 + P_x(\psi_2) \rfloor \cos\psi_2 \tag{21}$$

Dabei ist die Größe $\psi_2$ ein freier Parameter dieser Gleichung.

Betrachtet man nachfolgend eine zusammengesetzte Bahnlinie BL, die aus der ersten elementaren Klothoidenbahn $EKBL_1$ und der zweiten elementaren Klothoidenbahn $EKBL_2$ zusammengesetzt ist, mit deren Hilfe die Zustände $Z_0=[0,0,0,0]$ und $Z_3=[x_3{}^*, y_3{}^*, \psi_1 + \psi_2, 0]$ miteinander verbunden werden, können die Koordinaten des Punktes $P_3{}^*= [x_3{}^*, y_3{}^*]$ mit Hilfe der nachfolgenden Gleichung bestimmt werden:

$$\begin{bmatrix} x_3{}^* \\ y_3{}^* \end{bmatrix} = \begin{bmatrix} x_1 \\ y_1 \end{bmatrix} + \begin{bmatrix} \cos\psi_1 & -\sin\psi_1 \\ \sin\psi_1 & \cos\psi_1 \end{bmatrix} \begin{bmatrix} 2x_{02}\cos\psi_2 - x_2 \\ 2x_{02}\sin\psi_2 - y_2 \end{bmatrix} \tag{22}$$

Auf diese Weise ist dann auch die Größe $\psi_2$ festgelegt.

Um eine Überbestimmung zu verhindern, muss entweder eine Komponentengleichung der Gleichung (22) oder der Abstand:

$$d(x_1, y_1, x_{02}, x_2, y_2, \psi_1, \psi_2) = \sqrt{(x_3{}^*)^2 + (y_3{}^*)^2} \tag{23}$$

berücksichtigt werden.

Darüber hinaus besteht ein fester Zusammenhang zwischen der analytischen und der topografischen Darstellung der Bahnplanung. Die Gleichungssysteme (18) bis (22) beziehungsweise (18) bis (21) und (23) sind nur mit Hilfe numerischer Verfahren lösbar.

Analog dazu kann auch der Fall gelöst werden, bei dem $k_2 < k_1$ ist und damit $s_2 > s_1$ und $\psi_2 < \psi_1$ ist.

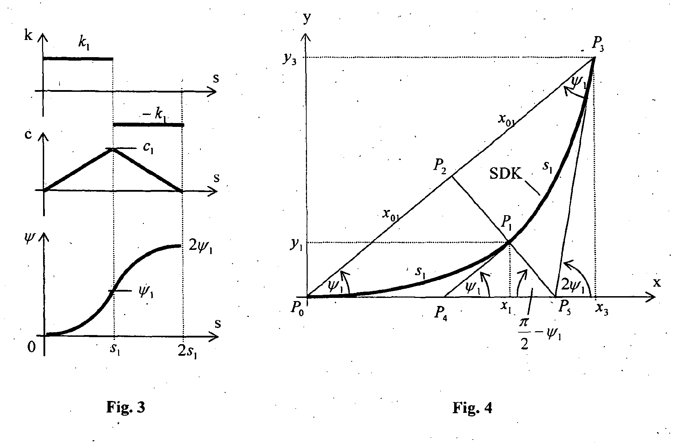

Es ist besonders vorteilhaft, wenn die beiden elementaren Klothoidenbahnlinien $EKBL_1$ und $EKBL_2$ einen spiegelsymmetrischen Verlauf besitzen, mithin also $\psi_1 = \psi_2$ ist. Daraus folgt, dass die beiden elementaren Klothoidenbahnlinien $EKBL_1$ und $EKBL_2$ die gleiche Bahnlänge besitzen (d.h.: $s_1 = s_2$ und $x_{01} = x_{02}$). Dieser Fall ist in Fig. 2 gestrichelt dargestellt und wird unter Bezugnahme auf Fig. 3 und Fig. 4 noch einmal ausführlich beschrieben.

In Fig. 4 sind zwei elementare Klothoidenbahnlinien $EKBL_1$, $EKBL_2$ gezeigt, bei denen die Schärfe k der Klothoide, wie in Fig. 3 zu erkennen, durch $k=k_1$ und $k=-k_1$ gegeben ist. Auf diese Weise erhält man eine symmetrische Doppelklothoide (SDK), welche die Punkte $P_0=[0,0]$ und $P_3=[x_3, y_3]$ beziehungsweise die entsprechenden Zustände $Z_0=[0, 0, 0, 0]$ und $Z_3=[x_3, y_3, 2\psi_1, 0]$ miteinander verbindet. Die Zielkoordinaten $x_3, y_3$ können dann wie folgt berechnet werden:

$$x_3 = 2x_{01}\cos\psi_1 = \frac{2}{c_1} P(\psi_1)\cos\psi_1$$

$$y_3 = 2x_{01} \cdot \sin\psi_1 = \frac{2}{c_1} P(\psi_1)\sin\psi_1 \qquad (24)$$

Darüber hinaus können die Parameter $x_1$, $y_1$, $x_{01}$ mit Hilfe der Gleichungen (13) bis (19) bestimmt werden.

Mit Hilfe der Gleichungssysteme (13) bis (19) und (24) lassen sich folgende grundsätzlichen Aufgaben der Bahnplanung beim Einparken eines Kraftfahrzeugs in eine Parklücke ausführen:

- Bestimmung des zurückgelegten Abstands $2x_{01}$ zwischen den Anfangs- und Endpunkten $P_0=[0,0]$ beziehungsweise $P_3=[x_3, y_3]$ bei Vorgabe der Änderung der Bahnrichtung $2\psi_1$ und einer maximalen Bahnkrümmung $c_1$;
- Bestimmung der tatsächlich erreichten Bahnrichtung $2\psi_1$ bei Vorgabe des zurückzulegenden Abstands $2x_{01}$ und der maximalen Bahnkrümmung $c_1$;
- Bestimmung der maximal erreichbaren Krümmung $c_1$ in Abhängigkeit von den beiden übrigen Zielparametern $2x_{01}$ und $2\psi_1$.

Die Bahnplanung kann somit in der Weise durchgeführt werden, dass die Basislinien von gleichschenkligen Plandreiecken direkt oder mit zusammengesetzten Geraden in der Weise miteinander verbunden werden, dass in den Anschlusspunkten keine Änderung der Bahnkrümmung eintritt. Dabei wird jedem der Plandreiecke eine symmetrische Doppelkothoide (SDK) zugeordnet.

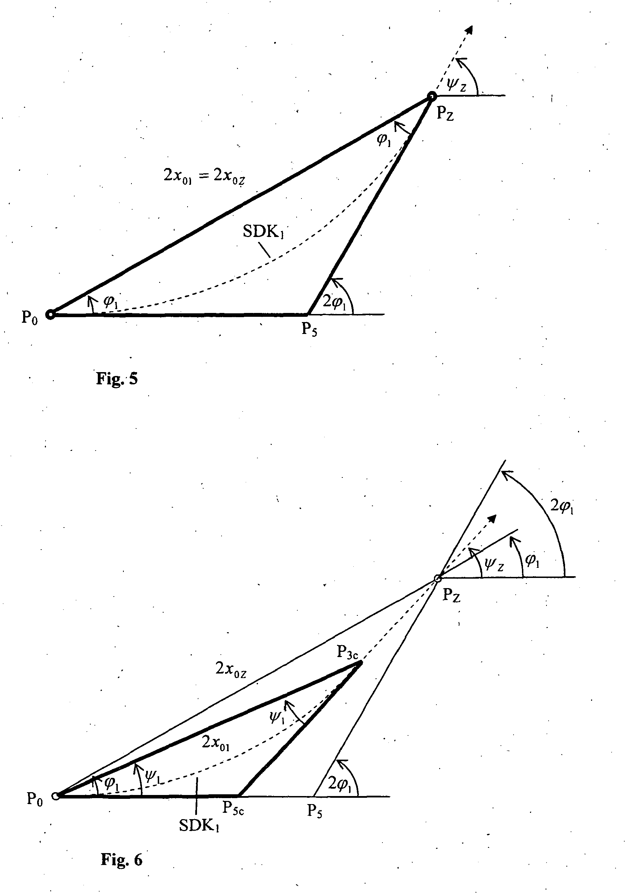

Die in Fig. 3 bis 6 dargestellten Beispiele zeigen, dass jede symmetrische Doppelklothoide $SDK_i$ durch die beiden Parameter $\psi_i$ und $x_{0i}$ bestimmt wird. Diese beiden Parameter können analog zur elementaren Klothoidenbahnlinie EKBL gemäß Gleichung (18) wie folgt dargestellt werden:

$$c_i x_{0i} = P(\psi_i) \qquad (25)$$

Durch Vorgabe von zwei der drei Parameter $c_i$, $x_{0i}$, $\psi_i$ kann die Bahnplanung durch Lösung dieser Gleichung auf einfache Art und Weise erfolgen.

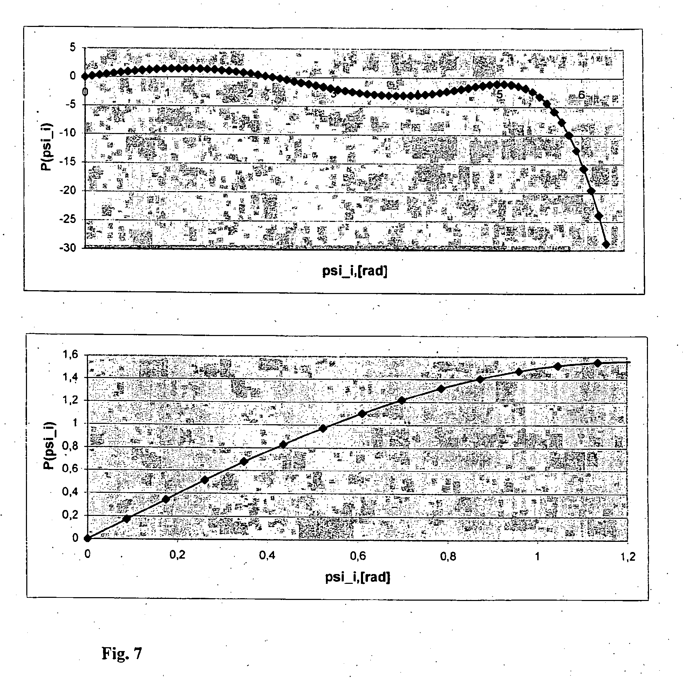

Es wird klar, dass das Polynom $P(\psi_i)$ eine maßgebende Funktion bei der Planung des Verlaufs der Bahnlinie eines gelenkten Kraftfahrzeugs ist. Der Verlauf des Polynoms $P(\psi_i)$ ist in Fig. 7 gezeigt. Aufgrund der nicht monotonen Eigenschaft dieses Polynoms $P(\psi_i)$ ist diese Funktion in einem Bereich $\psi_i < 1{,}22\,\mathrm{rad}$ ($\approx 70°$) für eine iterative Lösung besonders geeignet. Dieser Bereich ist für die meisten technischen Anwendungen ausreichend.

Wenn die geometrischen Koordinaten $x_{0i}$, $\psi_i$ vorgegeben werden, ergibt sich die maximale Bahnkrümmung $c_i$ zu:

$$c_i = \frac{P(\psi_i)}{x_{0i}} \qquad (26)$$

Bei der Bahnplanung unter realen Umgebungsbedingungen ist ein wichtiger Fall derjenige, bei dem die maximale Krümmung der Bahnlinie zum Beispiel durch einen maximalen Lenkeinschlag der Lenkung des Kraftfahrzeugs begrenzt ist. Dann gilt:

$$c_i \leq c_{imax} \qquad (27)$$

Diese Randbedingung ist insbesondere dann von Bedeutung, wenn das Kraftfahrzeug mit Hilfe des Fahrerassistenzsystems in eine verhältnismäßig kurze Parklücke eingeparkt werden soll. Beim Abfahren der Soll-Bahnlinie wird der maximale Einschlagwinkel der Lenkeinrichtung des Kraftfahrzeugs und dadurch auch die maximal mögliche Krümmung der Bahnlinie BL erreicht. Das führt dazu, dass zwei elementare Klothoidenbahnlinien $EKBL_1$, $EKBL_2$ durch die Kreisbahn (kurz: KB) miteinander verbunden werden.

Es besteht die Möglichkeit, dass die Klothoidenbahnlinien sowohl aus symmetrischen als auch aus asymmetrischen elementaren Klothoidenbahnlinien (EKBL) zusammengesetzt werden, die für die Bahnplanung eingesetzt werden. Um dabei den Rechenaufwand zu verringern, ist es allerdings vorteilhaft, nur symmetrische Doppelklothoiden (SDK) einzusetzen.

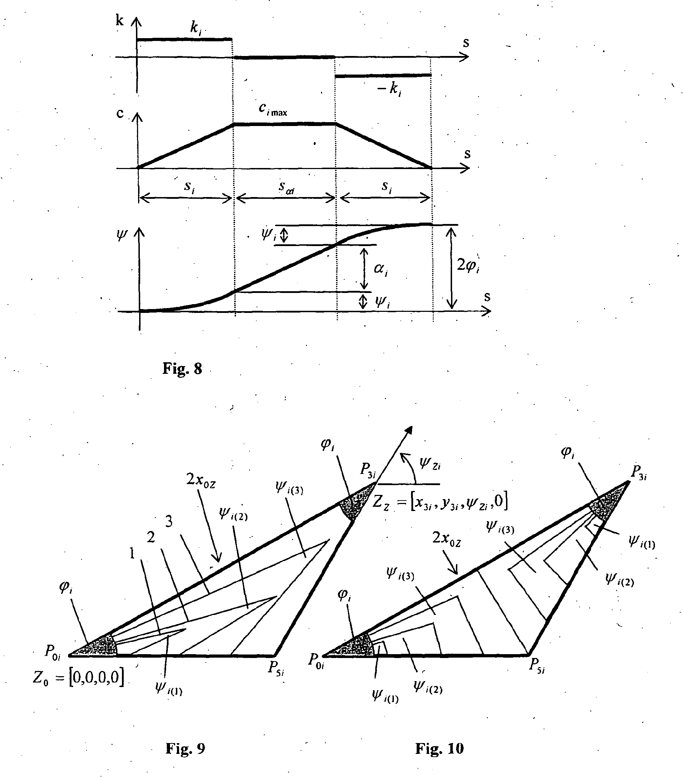

Der Verlauf der grundlegenden Größen des i-ten Plandreiecks ist in Fig. 8 gezeigt. Nach einer Bahnlänge $s_i$ wird die maximale Bahnkrümmung $c = c_{i max}$ erreicht. Der weitere Verlauf auf einer Bahnlänge von $s_{\alpha i}$ entspricht einer Kreisbahn mit dem Radius

$$R_{i\,min} = \frac{1}{c_{i\,max}} \qquad (28)$$

und der Kreisbahn folgt dann die zweite elementare Klothoidenbahnlinie $EKBL_2$. Der Öffnungswinkel der Kreisbahn kann durch die Gleichung:

$$\alpha_i = \frac{s_{\alpha i}}{R_{i\,min}} \qquad (29)$$

bestimmt werden.

Ein Ziel ist es nunmehr, bei gegebenen Zielkoordinaten (Abstand: $2x_{0Z}$ und Bahnrichtungsänderung: $\psi_{Zi} = 2\varphi_i$) und bei Vorgabe der maximalen, durch den maximalen Einschlagwinkel der Lenkung des Kraftfahrzeugs vorgegebenen Krümmung $c_{i max}$ den Basiswinkel der Klothoide $\psi_i$ im winkelbereich $0 \leq \psi_i \leq \varphi_i$ zu bestimmen, das heißt, die Verbindung der Anfangs- und Endzustände:

$$Z_0 = [0, 0, 0, 0],$$

$$Z_Z = [x_{3i}, y_{3i}, \psi_{Zi}, 0] \qquad (30)$$

unter der Randbedingung

$$c_i \leq c_{imax} \qquad (31)$$

herzustellen.

Die Planung der Bahnlinie des Kraftfahrzeugs wird dabei in den nachfolgend beschriebenen Verfahrensschritten durchgeführt:

1. Aus der Zielvorgabe der Bahnplanung werden die Parameter für eine symmetrische Doppelklothoide mit Hilfe der nachfolgenden Gleichungen bestimmt:

$$\varphi_i = \frac{\psi_{Zi}}{2}$$

$$x_{0Z} = \frac{\sqrt{x_{3i}^2 + y_{3i}^2}}{2}$$

$$c_i = \frac{P(\varphi_i)}{x_{0z}} \tag{32}$$

2. Wenn

$$\frac{P(\varphi_i)}{x_{0z}} \le c_{i\max} , \tag{33}$$

muss in die Bahnlinie keine Kreisbahn eingefügt werden.

3. Wenn

$$\frac{P(\varphi_i)}{x_{0z}} > c_{i\max} , \tag{34}$$

muss die Bahnkrümmung $c_i$ durch Einfügen einer Kreisbahn begrenzt werden.

Dieser Lösungsweg wird nachfolgend anhand der Darstellung in Fig. 9 und Fig. 10 näher erläutert. Gegeben ist ein gleichschenkliges Plandreieck $\Delta(P_{0i}, P_{3i}, P_{5i})$ mit einem Basiswinkel $\varphi_i$ und einer Basis mit einer Länge $2x_{0z}$.

Die innerhalb des Plandreiecks $\Delta(P_{0i}, P_{3i}, P_{5i})$ liegenden Dreiecke 1, 2 und 3 zeigen beispielhaft drei neue Plandreiecke für symmetrische Doppelklothoiden mit Basiswinkeln $\psi_{i(1)} < \psi_{i(2)} < \psi_{i(3)} < \varphi_i$ (siehe Fig. 9).

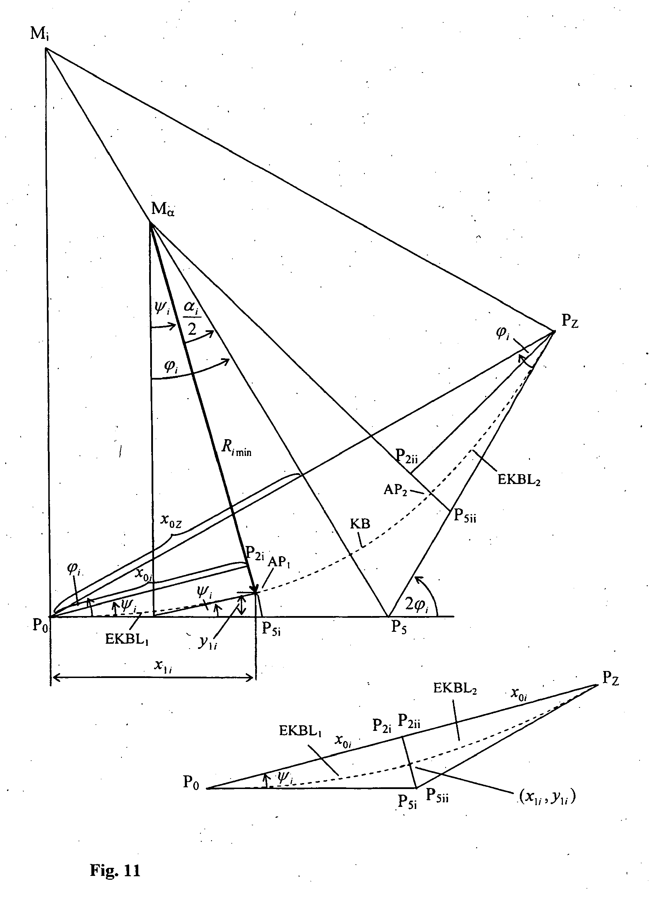

Die drei inneren Plandreiecke 1, 2, 3 werden jeweils auf einer eigenen Symmetrielinie zusammen mit den zugehörigen symmetrischen Doppelklothoiden,(SDK) getrennt. Die abgetrennte zweite Hälfte der Plandreiecke 1, 2, 3 wird dann, wie in Fig. 10 zu erkennen, in den Eckpunkt $P_{3i}$ des Plandreiecks $\Delta(P_{0i}, P_{3i}, P_{5i})$ verschoben. Die durch die Teilung der symmetrischen Doppelklothoiden erhaltenen elementaren Klothoidenbahnlinien $EKBL_1$ und $EKBL_2$ werden dann, wie in Fig. 11 gezeigt, in den Anschlusspunkten $AP_1$ und $AP_2$ mit einer Kreisbahn (KB) verbunden. Der Mittelpunkt der Kreisbahn ist mit $M_\alpha$ bezeichnet.

Dann gelten folgende Gruppen von Gleichungen:

$$\alpha_i + 2\psi_i = 2\varphi_i \tag{35}$$

$$\begin{bmatrix} x_{3i} \\ y_{3i} \end{bmatrix} = \begin{bmatrix} x_{1i} \\ y_{1i} \end{bmatrix} + \frac{1}{c_{i\max}} \begin{bmatrix} \sin(\alpha_i + \psi_i) - \sin\psi_i \\ \cos\psi_i - \cos(\alpha_i + \psi_i) \end{bmatrix} + \begin{bmatrix} \cos\alpha_i & -\sin\alpha_i \\ \sin\alpha_i & \cos\alpha_i \end{bmatrix} \begin{bmatrix} 2x_{0i}\cos\psi_i - x_{1i} \\ 2x_{0i}\sin\psi_i - y_{1i} \end{bmatrix} \tag{36}$$

$$x_{0i} = \frac{P(\psi_i)}{c_{i\max}} \tag{37}$$

$$x_{1i} = \frac{2\psi_i}{c_{i\max}} P_x(\psi_i), \quad y_{1i} = \frac{2\psi_i}{c_{i\max}} P_y(\psi_i) \tag{38}$$

Nach einer Eliminierung sämtlicher Hilfsvariablen ergibt sich dann die transzendente Gleichung:

$$F(x_{0z},\ \varphi_i,\ c_{i\max},\ \dot{\psi}_i) = 0 \qquad\qquad (39)$$

Dabei ist die Größe $\psi_i$ die Unbekannte dieser Gleichung und die drei Größen $x_{0z}$, $\varphi_i$, $c_{i\max}$ sind Parameter. Aus der transzendenten Gleichung (39) kann die unbekannte Größe $\psi_i$ numerisch bestimmt werden.

Man erkennt, dass analog zu dem Fall, bei dem keinerlei Begrenzung der Bahnkrümmung $c_i$ auftritt, die für die Bahnplanung wichtigen Parameter wiederum durch den Basiswinkel $\psi_i$ der elementaren Klothöidenbahnlinie bestimmt werden.

4. Aus den Grundgleichungen der elementaren Klothoidenbahnlinien (EKBL$_1$, EKBL$_2$) werden dann die für die Lenkeinrichtung des Kraftfahrzeugs maßgeblichen Größen bestimmt.

$$s_{1i} = \frac{2\psi_i}{c_{i\max}}; \quad k_i = \frac{c_{i\max}^2}{2\psi_i} \qquad\qquad (40)$$

$$s_{\alpha i} = \frac{\alpha_i}{c_{i\max}} = 2\frac{\varphi_i - \psi_i}{c_{i\max}} \qquad\qquad (41)$$

5. In einem letzten Verfahrensschritt werden bei zusammengesetzten Bahnlinien, die mindestens einen Wendepunkt aufweisen, die freien Parameter $x_{01}/x_{03}$ festgesetzt.

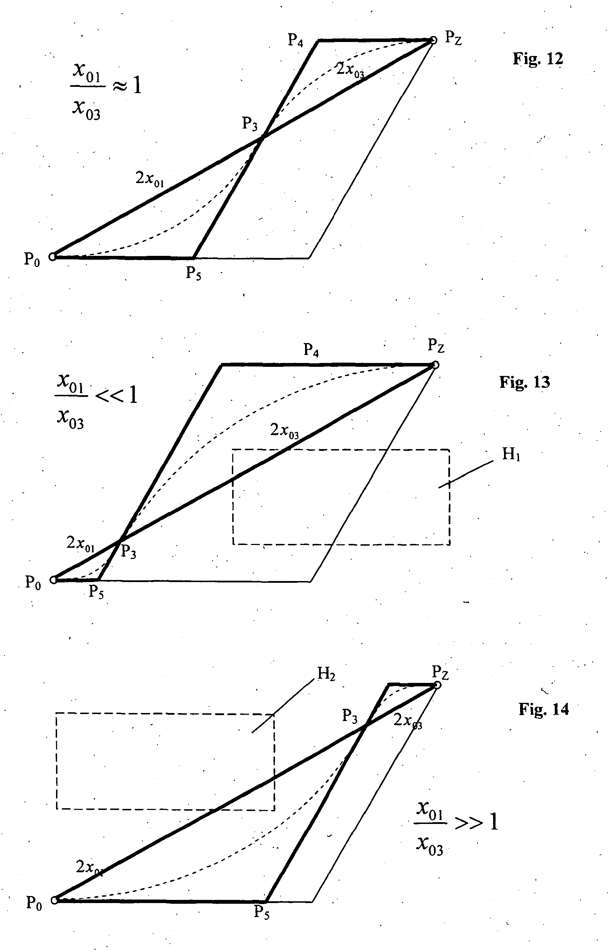

In Fig. 12 bis Fig. 14 sind typische Beispiele für Bahnlinie mit einem Wendepunkt dargestellt. Wenn es möglich ist, wird das Verhältnis $x_{01}/x_{03}$ auf einen optimalen Wert, insbesondere auf das Verhältnis $x_{01}/x_{03} \sim 1$, eingestellt. Dies ist insbesondere deshalb vorteilhaft, weil dadurch eine symmetrische Lenkbelastung entsteht.

In Fig. 13 und Fig. 14 sind zwei Beispiele für Bahnlinien mit einem Wendepunkt gezeigt, bei denen dieses optimale Verhältnis $x_{01}/x_{03} \sim 1$ nicht erreicht werden kann.

In Fig. 13 ist die Basislänge $x_{01}$ erheblich kleiner als die Basislänge $x_{03}$ und in Fig. 14 ist $x_{01}$ erheblich größer als $x_{03}$. Diese in Fig. 13 und 14 gezeigten Situationen treten insbesondere dann auf, wenn eine Kollision mit Hindernissen H1, H2, die beispielsweise Gegenstände oder Fahrzeuge innerhalb der Parklücke sein können, während des Einparkens verhindert werden soll. Das Verhältnis $x_{01}/x_{03}$ weist eine obere beziehungsweise eine untere Grenze auf. Diese beiden Grenzen ergeben sich daraus, dass die Klothoidenlänge in dem entsprechend kleiner werdenden Plandreieck ebenfalls kleiner wird. Die minimale Klothoidenlänge stellt insbesondere eine Systemgrenze dar.

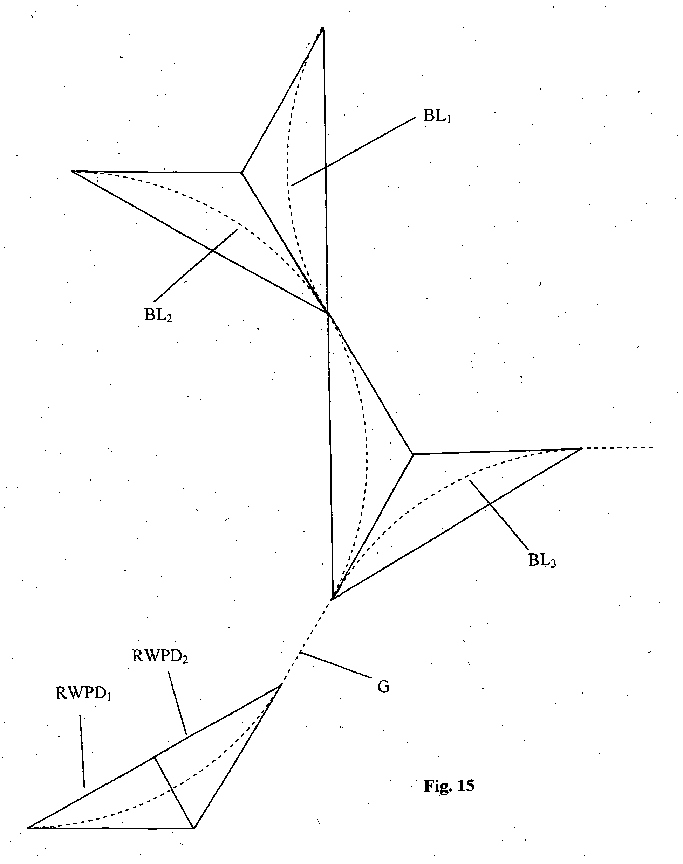

In Fig. 15 ist gezeigt, dass die Plandreiecke quasi in beliebiger Art und Weise zusammengefügt werden können.

Bei einer wichtigen Anwendung des hier vorgestellten Verfahrens zur Planung einer Bahnlinie ist es beim Ein- und Ausparken eines Kraftfahrzeugs von besonderer Bedeutung, dass die Eignung der Parklücke zum Einparken des Kraftfahrzeugs relativ rasch bestimmt werden kann. Ziel ist es dabei, möglichst alle (unter Umständen auch nur unter Grenzbedingungen) geeigneten Parklücken auszunutzen.

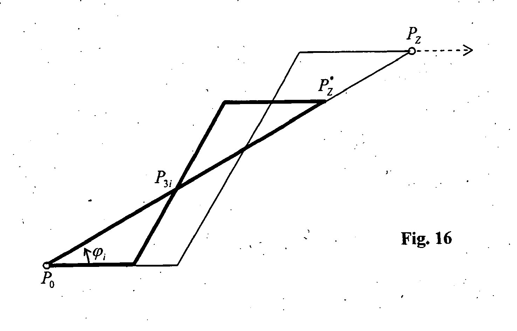

Eine Parklücke ist dann für das Einparken des Kraftfahrzeugs geeignet, wenn mindestens mit der minimalen Klothoidenbahnlänge und/oder der maximalen Bahnkrümmung ein kollisionsfreies Befahren der Parklücke möglich ist. Dies soll nachfolgend anhand von Fig. 16 erläutert werden. Die Gleichungen (35) bis (38) werden in der Weise vorgegeben, dass die Start- und Zielzustände gegeben sind, so dass dadurch auch die Parameter $x_{0i}$, $\varphi_i$ des Plandreiecks vorgegeben sind. Unter der Vorgabe der maximalen Bahnkrümmung $c_{i,\max}$ und der minimalen Klothoidenbahnlänge $s_{i,\min}$, die ungefähr $x_{0i}$ entspricht, können aus den Gleichungen (35) und (37) die Winkelparameter $\alpha_i$ und $\psi_i$ bestimmt werden. Mit Hilfe der Gleichung (36) können dann die Koordinaten des Punktes $P_z{}^*$ bestimmt werden. Liegt der Punkt $P_z{}^*$ auf der Geraden $\overline{P_0 P_z}$, die den Anfangs- und den Endzustand miteinander verbindet, dann ist die Parklücke als geeignet anzusehen.

Mit dem hier gezeigten Verfahren können gegenüber dem Stand der Technik folgende Vorteile erreicht werden:

- Die Klothoiden werden in die Bahnplanung einbezogen.
- Das Verfahren ist systematisch.
- Durch Vorgabe des Zielzustandes und/oder durch Festsetzung des freien Parameters (Basislänge beziehungsweise Aufteilung zweier Basislängen der zueinander gehörenden Plandreiecke) können weitere Randbedingungen, wie zum Beispiel die Optimierung, die Kollisionsvermeidung, die Parklückeneignungsprüfung und so weiter berücksichtigt werden.

**Patentansprüche**

1. Verfahren zur Bestimmung einer in einer zweidimensionalen Ebene verlaufenden Bahnlinie eines Kraftfahrzeugs für eine geführte Bewegung des Kraftfahrzeugs mit Hilfe eines Fahrerassisterizsystems, wobei ein Anfangszustand mit einem Endzustand durch die Bahnlinie verbunden wird und jeder der Zustände $Z_i = [x_i, y_i, \psi_i, c_i]$ entlang der Bahnlinie durch vier Zustandkoordinaten charakterisiert wird, wobei $x_i$ und $y_i$ die kartesischen Koordinaten eines Punktes $P_i$ bezeichnen, $\psi_i$ der Richtungswinkel der Tangente und $c_i$ die Krümmung der Bahnlinie im Punkt $P_i$ ist- und wobei die Bahnlinie aus einer Anzahl elementarer Bahnlinien, die sich in Anschlusspunkten $AP_i$ aneinander anschließen, in der Weise zusammengesetzt wird, dass die vier Zustandskoordinaten des Zustands $Z_i$ in den Anschlusspunkten $AP_i$ einen stetigen Übergang besitzen, **dadurch gekennzeichnet, dass** der Bahnlinie mindestens ein gleichschenkliges Plandreieck mit den Eckpunkten $\Delta(P_0, P_3, P_5)$ zugeordnet wird, bei dem $P_0$ den Startpunkt und $P_3$ den zielpunkt mindestens eines Teils der Bahnlinie bezeichnet, und der Punkt $P_5$, welcher der Plandreiecksbasis $\overline{P_0P_3}$ gegenüberliegt, durch den Schnittpunkt der beiden Plandreiecksschenkel $\overline{P_0P_5}$ beziehungsweise $\overline{P_5P_3}$ in der Weise bestimmt wird, dass die beiden Schenkel $\overline{P_0P_5}$, $\overline{P_5P_3}$ eine identische Länge aufweisen und mit der Plandreieckseite $\overline{P_0P_3}$ jeweils einen identischen Scheitelwinkel $\psi_1$ einschließen, wobei der Winkel $\psi_1$ des Plandreiecks beim Eckpunkt $P_0$ durch den Winkel zwischen der Tangente der Bahnlinie und der Dreieckseite $\overline{P_0P_3}$ bestimmt wird und durch die Parameter des Plandreiecks die Parameter der elementaren Bahnlinien bestimmt werden.

2. Verfahren nach Anspruch 1, **dadurch gekennzeichnet, dass** die Bahnlinie aus mindestens zwei Klothoiden zusammengesetzt wird.

3. Verfahren nach Anspruch 1 oder 2, **dadurch gekennzeichnet, dass** in die Bahnlinie mindestens eine Gerade und/ oder mindestens ein Kreisbogen eingefügt werden.

4. Verfahren nach einem der Ansprüche 1 bis 3, **dadurch gekennzeichnet, dass** die Bahnlinie mindestens teilweise aus symmetrischen elementaren Bahnlinie zusammengesetzt wird.

5. Verfahren nach Anspruch 4, **dadurch gekennzeichnet, dass** jeder der symmetrischen elementaren Bahnlinien jeweils ein gleichschenkliges Plandreieck zugeordnet wird und die Plandreiecke in der Weise miteinander verbunden werden, dass jeweils die beiden Schenkel der beiden sich aneinander anschließenden Plandreiecke in einem gemeinsamen Anschlusspunkt eine Gerade bilden.

6. Verfahren nach Anspruch 5, **dadurch gekennzeichnet, dass** die Plandreiecke in den Anschlusspunkten durch eine Gerade miteinander verbunden werden, wobei die Gerade eine Verlängerung der sich an sie anschließenden Schenkel der Plandreiecke bildet.

7. Verfahren nach einem der Ansprüche 1 bis 6, **dadurch gekennzeichnet, dass** die elementare Bahnlinie mindestens abschnittsweise eine symmetrische Doppelklothoide ist.

8. Verfahren nach Anspruch 7, **dadurch gekennzeichnet, dass** der symmetrischen Doppelklothoide ein gleichschenkliges Plandreieck $\Delta(P_0, P_3, P_5)$ zugeordnet wird, das im Punkt $P_5$ durch eine Winkelhalbierende in zwei rechtwinklige Dreiecke $\Delta(P_0, P_5, P_2)$ und $\Delta(P_3, P_5, P_2)$ aufgeteilt wird, wobei die Dreiecke $\Delta(P_0, P_5, P_2)$ und $\Delta(P_3, P_5, P_2)$ den Winkel $\psi_1$ und identische Ankatheten $x_{01} = \overline{P_0P_2} = \overline{P_2P_3}$ aufweisen und diese rechtwinkligen Dreiecke jeweils einer Hälfte der symmetrischen Doppelklothoide zugeordnet werden.

9. Verfahren nach Anspruch 8, **dadurch gekennzeichnet, dass** sich die beiden Klothoiden auf der Dreiecksseite $\overline{P_2P_5}$ in einem Punkt $P_1$ treffen und weiterhin, die Punkte $P_0$ und $P_3$ mit dem Punkt $P_1$ in der Weise verbinden, dass die beiden Klothoidenbahnlinien ihre maximale Bahnkrümmung $c_1 = P(\psi_1)/x_{01}$ im Anschlusspunkt $AP_1$ erreichen.

10. Verfahren nach einem der Ansprüche 1 bis 9, **dadurch gekennzeichnet, dass** das charakteristische Polynom $P(\psi_1)$ der Klothoidenbahnlinie die Form $P(\psi_1) = 2\psi_{1L} P_y(\psi_1)_{tg}\psi_1 + P_x(\psi_1) \rfloor \cos\psi_1$ besitzt und die Polynomfunktionen $P_x$ und $P_y$ durch die Gleichungen

$$P_x(\psi_1) = \sum_{n=0}^{N} (-1)^n \frac{\psi_1^{2n}}{(4n+1)(2n)!}$$

*und*

$$P_y(\psi_1) = \sum_{n=0}^{N} (-1)^n \frac{\psi_1^{2n+1}}{(4n+3)(2n+1)!}$$

bestimmt werden.

**11.** Verfahren nach einem der vorhergehenden Ansprüche, **dadurch gekennzeichnet, dass** Stellgrößen für die Lenkeinrichtung des Kraftfahrzeugs dadurch bestimmt werden, dass die Länge $s_{1i}$ und die Schärfe $k_i$ der Klothoiden

durch die Formeln $s_{1i} = \dfrac{2\psi_i}{c_{i\,max}}$; $k_i = \dfrac{c_{i\,max}^2}{2\psi_i}$ bestimmt werden, wobei die Bogenlänge des mindestens einen Kreisbogens durch die Beziehung $s_{\alpha i} = 2\dfrac{\varphi_i - \psi_i}{c_{i\,max}}$ bestimmt wird.

**Claims**

1. Method of computing the path of a motor vehicle along a two-dimensional plane required to control the motion of the motor vehicle by means of a driver-assisting system, wherein the path connects an initial state with a terminal state and each of states $Z_i = [x_i, y_i, \psi_i, c_i]$ along the path is **characterized by** four state coordinates with $x_i$ and $y_i$ being the Cartesian coordinates of a point $P_i$, $\psi_i$ being the direction angle of the tangent, and $c_i$ being the curvature of the path at point $P_i$, and with the path being assembled from a number of elementary paths joining at junction points $JP_i$ such that the four state coordinates of state $Z_i$ have a continuous transition in the junction points $JP_i$, **characterized in that** the path is assigned at least one isosceles planar triangle with vertices $\Delta(P_0, P_3, P_5)$, where $P_0$ is the starting position and $P_3$ is the terminal position of at least a section of the path, and where point $P_5$ which is located opposite the base of the planar triangle $P_0P_3$ is determined by the intersection of the two legs $P_0P_5$ and $P_5P_3$ of the planar triangle such that the two legs $P_0P_5$, $P_5P_3$ are of the same length and, together with side $P_0P_3$ of the planar triangle, form the same vertical angle $\psi_i$, with angle $\psi_i$ at vertex $P_0$ of the planar triangle being determined by the angle formed by the tangent of the path and side $P_0P_3$ of the triangle, and such that the parameters of the elementary paths are determined by the parameters of the planar triangle.

2. Method of claim 1, **characterized in that** the path is assembled from at least two clothoids.

3. Method of claim 1 or 2, **characterized in that** at least one straight line and/or at least one circular line are added to the path.

4. Method of claims 1 to 3, **characterized in that** at least some of the path is assembled from symmetrical elementary paths.

5. Method of claim 4, **characterized in that** an isosceles planar triangle is allocated to each of the symmetrical elementary paths and that the planar triangles are joined such that the two sides of any two adjoining planar triangles form a straight line in the shared junction point.

6. Method of claim 5, **characterized in that** the planar triangles are joined by a straight line going through the junction points such that the straight line extends the adjacent legs of the planar triangles.

7. Method of claims 1 to 6, **characterized in that** at least some section of the elementary path is a symmetrical double clothoid.

**8.** Method of claim 7, **characterized in that** the symmetrical double clothoid is assigned an isosceles planar triangle $\Delta$ ($P_0$, $P_3$, $P_5$) that is cut into two right triangles $\Delta$ ($P_0$, $P_5$, $P_2$) and $\Delta$ ($P_3$, $P_5$, $P_2$) by a bisecting line going through point $P_5$ such that the triangles $\Delta$ ($P_0$, $P_5$, $P_2$) and $\Delta$ ($P_3$, $P_5$, $P_2$) share angle $\psi_1$ and identical major catheti $x_{01}$ = $P_0P_2$ = $P_2P_3$ and that each of the right triangles is allocated to one half of the symmetrical double clothoid.

**9.** Method of claim 8, **characterized in that** the two clothoids meet in a point $P_1$ on side $P_2P_5$ and also connect points $P_0$ and $P_3$ with point $P_1$ such that the two clothoid paths have their maximum curvature $c_1 = P (\psi_1) / x_{01}$ at junction point $JP_1$.

**10.** Method of claims 1 to 9, **characterized in that** the characteristic polynomial $P(\psi_1)$ of the clothoid path computes as $P (\psi_1) = 2\psi_1 [P_y (\psi_1)tg\psi_1 + P_x (\psi_1] cos\psi_1$ and that equations

$$P_x(\psi_1) = \sum_{n=0}^{N} (-1)^n \frac{\psi_1^{2n}}{(4n+1)(2n)!} i$$

et

$$P_y(\psi_1) = \sum_{n=0}^{N} (-1)^n \frac{\psi_1^{2n+1}}{(4n+3)(2n+1)!}$$

can be used to compute the polynomial functions Px and Py.

**11.** Method of one of the above claims, **characterized in that** variables for controlling the motor vehicle's steering mechanism are defined by length $S_{1i}$ and acuteness $k_i$ of the clothoids computing as $s_{1i} = \dfrac{2\psi_i}{c_{i\,max}}; \quad k_i = \dfrac{c_{i\,max}^2}{2\psi_i}$

such that the arc length of the at least one arc is determined by the equation $s_{ai} = 2\dfrac{\varphi_i - \psi_i}{c_{i\,max}}$

**Revendications**

**1.** Procédé pour la détermination d'une ligne de trajectoire d'un véhicule à tracé bidimensionnel en vue du déplacement guidé du véhicule à l'aide d'un système d'assistance à la conduite, un état initial étant relié à un état final par la trajectoire et chacun des états $z_i = (x_i, y_i, \psi_i, c_i)$ le long de la trajectoire étant **caractérisé par** quatre coordonnées d'état, $x_i$ et $y_i$ désignant les coordonnées cartésiennes d'un point $p_i$, $\psi i$ l'angle de direction de la tangente et $c_i$ la courbe de la ligne de trajectoire dans le point $p_i$ et la ligne de trajectoire, se composant d'un nombre de lignes de trajectoire élémentaires qui se touchent aux points de raccordement $Ap_i$, étant composée de manière que les quatre coordonnées de l'état $z_i$, aux points de raccordement $Ap_i$, présentent une transition constante, **caractérisé en ce qu'**au moins un triangle plan à côtés latéraux identiques avec les points angulaires $\Delta$ ($P_0$, $P_3$, $P_5$) soit affecté à la ligne de trajectoire, triangle pour lequel $P_0$ représente le point de départ et $P_3$ le point d'arrivée d'au moins une partie de la ligne de trajectoire et **en ce que** le point $P_5$, qui se trouve en face de la base du triangle plan $P_0P_3$, est défini par le point d'intersection des deux côtés latéraux du triangle plat $P_0P_5$ ou $P_5P_3$ de manière que les deux côtés latéraux $P_0P_5$, $P_5P_3$ présentent une longueur identique et incluent avec le côté du triangle plan $P_0P_3$ respectivement un angle opposé au sommet $\psi_1$ identique, l'angle $\psi_1$ du triangle plan au point angulaire $p_0$ étant défini par l'angle entre la tangente de la ligne de trajectoire et le côté du triangle $P_0P_3$ et les paramètres des lignes de trajectoires élémentaires étant définis par les paramètres du triangle plan.

**2.** Procédé selon la revendication 1, **caractérisé en ce que** la ligne de trajectoire se compose d'au moins deux clothoïdes.

**3.** Procédé selon la revendication 1 ou 2, **caractérisé en ce qu'**au moins une ligne droite et/ou au moins un arc de cercle soit inséré dans la ligne de trajectoire.

4. Procédé selon l'une des revendications 1 à 3, **caractérisé en ce que** la ligne de trajectoire soit au moins composée partiellement de lignes de trajectoire élémentaires symétriques.

5. Procédé selon la revendication 4, **caractérisé en ce qu'**un triangle plan à côtés latéraux identiques est respectivement affecté à chacune des lignes de trajectoire élémentaires symétriques et que les triangles plans sont reliés entre eux de manière que les deux côtés des deux triangles plans se touchant forment respectivement une droite en un point de raccordement commun.

6. Procédé selon la revendication 5, **caractérisé en ce que** les triangles plans sont reliés entre eux par une droite aux points de raccordement, la droite formant une prolongation du côté des triangles plans y étant raccordé.

7. Procédé selon l'une des revendications 1 à 6, **caractérisé en ce que** la ligne de trajectoire élémentaire est au moins en partie une double clothoïde symétrique.

8. Procédé selon la revendication 7, **caractérisé en ce qu'**un triangle plan à côtés latéraux égaux $\Delta$ ($P_o$, $P_3$, $P_5$) est affecté à la double clothoïde symétrique, lequel triangle, au point $P_5$, est subdivisé en deux triangles rectangles $\Delta$ ($P_o$, $P_5$, $P_2$) et $\Delta$ ($P_3$, $P_5$, $P_2$) par une bissectrice, les triangles $\Delta$ ($P_o$, $P_5$, $P_2$) et $\Delta$ ($P_3$, $P_5$, $P_2$) présentant l'angle $\psi_1$ et des côtés adjacents à $\alpha$ identiques $x_{o1} = P_oP_2 = P_2P_3$ et ces triangles rectangles étant respectivement affectés à une moitié de la double clothoïde symétrique.

9. Procédé selon la revendication 8, **caractérisé en ce que** les deux clothoïdes sur le côté du triangle $P_2P_5$ se rencontrent en un point $P_1$ et que d'autre part, les points $P_o$ et $P_3$ s'associent au point $P_1$ de manière que les deux lignes de trajectoire clothoïde atteignent leur courbe maximale $c_1 = P (\psi_1) / X_{o1}$ au point de raccordement $AP_1$.

10. Procédé selon l'une des revendications 1 à 9, **caractérisé en ce que** le polynôme caractéristique $P(\psi_1)$ de la ligne de trajectoire clothoïde possède la forme $P(\psi_1) = 2 (\psi_1) XPy(\psi_1)tg \psi_1 + P_x(\psi_1)Xcos\psi_1$ et que les fonctions polynômes $P_x$ et $P_y$ sont définies par les équations

$$P_x(\psi_1) = \sum_{n=0}^{N} (-1)^n \frac{\psi_1^{2n}}{(4n+1)(2n)}$$

et

$$P_y(\psi_1) = \sum_{n=0}^{N} (-1)^n \frac{\psi_1^{2n+1}}{(4n+3)(2n+1)}.$$

11. Procédé selon l'une des revendications précédentes, **caractérisé en ce que** les grandeurs de réglage pour le braquage du véhicule sont définies par le fait que la longueur $S_{1i}$ et la netteté $k_i$ des clothoïdes sont définies par les formules

$$S_{1i} = \frac{2\psi_1}{c_{imax}} \; ; \; k_i = \frac{c^2_{imax}}{2\psi_i},$$

la longueur de l'arc de l'arc de cercle au moins étant définie par le rapport

$$S_{ai} = 2 \frac{\varphi_i - \psi_i}{c_{imax}}.$$

Fig. 1

Fig. 2

Fig. 3

Fig. 4

Fig. 5

Fig. 6

**Fig. 7**

Fig. 8

Fig. 9

Fig. 10

Fig. 11

$$\frac{x_{01}}{x_{03}} \approx 1$$

$2x_{03}$

$P_4$   $P_Z$

$P_3$

$2x_{01}$

$P_0$

$P_5$

**Fig. 12**

$$\frac{x_{01}}{x_{03}} << 1$$

$P_4$   $P_Z$

$2x_{03}$

$H_1$

$2x_{01}$   $P_3$

$P_0$

$P_5$

**Fig. 13**

$H_2$   $P_Z$

$P_3$   $2x_{03}$

$2x_{01}$

$$\frac{x_{01}}{x_{03}} >> 1$$

$P_0$

$P_5$

**Fig. 14**

BL₁

BL₂

BL₃

RWPD₂

RWPD₁

G

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2901504 B1
- DE 1984222 A1
- DE 19940007 A1

**In der Beschreibung aufgeführte Nicht-Patentliteratur**

- On Curves of Minimal Length with a Constraint on Average Curvature, and with Prescibed Initial and Terminal Positions and Tangents. *American Journal of Mathematics,* 1957, vol. LXXIX, 497-516

- **Souères ; Laumond.** Shortest Paths synthesys for a Car-Like Robot. *IEEE Trans. On Automatic Control,* Mai 1996, vol. 41 (5), 672-688